Europäisches Patentamt

European Patent Office

Office européen des brevets

(11) Numéro de publication: **0 418 181 A1**

# DEMANDE DE BREVET EUROPEEN

(21) Numéro de dépôt: 90460033.5

(22) Date de dépôt: 07.09.90

(51) Int. Cl.5: **G01S 5/04**, G01S 13/74

(30) Priorité: 13.09.89 FR 8912219

(43) Date de publication de la demande:
20.03.91 Bulletin 91/12

(84) Etats contractants désignés:
AT BE CH DE DK ES GB GR IT LI LU NL SE

(71) Demandeur: TELECOM SYSTEMES MOBILES SA
66, Avenue du Maine
F-75014 Paris(FR)

(72) Inventeur: Audoli, Daniel
15, rue de Crécy
F-77580 Bouleurs(FR)

(74) Mandataire: Le Guen, Louis François
Cabinet Louis Le Guen 38, rue Levavasseur
B.P. 91
F-35802 Dinard Cédex(FR)

(54) Système radioélectrique de localisation d'un mobile.

(57) Le système comprend, dans chaque mobile, un répondeur (1) dont le récepteur (2) est un récepteur d'appel de personnes avec code(s) individuel(s) d'identification et dont l'émetteur (3) est capable d'émettre le code d'identification du répondeur (1), un réseau radioélectrique (7-8-9) d'appels de personnes, et un ensemble de radiogoniomètres (10-11-12) capable de localiser, par triangulation, le mobile dont l'émetteur (3) du répondeur (1) émet un code d'identification en réponse au code d'appel lancé par le réseau radioélectrique (7-8-9).

L'ensemble de radiogoniomètres (10-11-12) est relié au réseau radioélectrique (7-8-9) par des moyens de transmission (13) pour être mis en alerte à chaque code d'appel lancé par le réseau.

Le réseau radioélectrique (7-8-9), après l'envoi d'un premier code d'appel, ne lancera un nouveau code d'appel vers un autre mobile qu'après un intervalle de temps prédéterminé. En variante, la sortie de l'organe de commande (4) du répondeur (1) n'est validée, à la réception d'un code d'appel, qu'après un retard prédéterminé, et, pendant ledit retard prédéterminé, le réseau radioélectrique (7-8-9) peut lancer séquentiellement de nouveaux appels.

FIG.1

FIG.2

EP 0 418 181 A1

## SYSTÈME RADIOÉLECTRIQUE DE LOCALISATION D'UN MOBILE

La présente invention concerne un système radioélectrique de localisation de mobiles. Plus particulièrement, le système de l'invention peut être utilisé pour la localisation de véhicules volés.

En ce qui concerne la radiolocalisation de véhicules volés, l'état de la technique peut être défini par les enseignements tirés des documents suivants : FR-A-2 529 152, FR-A-2 587 664 et FR-A-2 620 096.

Dans le document FR-A-2 529 152, il est décrit un système comprenant un émetteur/récepteur monté dans un véhicule dont l'émetteur émet un signal radioélectrique caractéristique dès l'utilisation frauduleuse du véhicule et un ou plusieurs émetteurs/récepteurs de postes de surveillance installés dans des postes ou des voitures de police, des postes de péage, etc., et capables de recevoir le signal caractéristique émis. De préférence, ce signal émis contient l'identification du véhicule. Le récepteur du véhicule est, à son tour, capable de recevoir un signal de réponse de l'un ou des émetteurs/récepteurs des postes de surveillance et, à la réception d'un tel signal, de commander une alarme dans le véhicule et, éventuellement de l'immobiliser.

Ce système connu prévoit également la localisation de l'émetteur du véhicule par le récepteur d'un poste de surveillance alimenté par une antenne unidirectionnelle.

Dans le document FR-A-2 587 664, il est décrit un système dans lequel une station centrale est pourvue d'un dispositif interrogateur/récepteur par voie hertzienne qui lance un message d'interrogation à chaque mise en service ou franchissement d'une limite par un véhicule sous surveillance et dans lequel chaque véhicule sous surveillance comporte un répondeur codé qui est activé en réponse au message d'interrogation de l'unité centrale. Le répondeur contient en mémoire l'identité du véhicule et est mis en état de fonctionnement correct par un badge ou la composition d'un code personnel. Toute réponse non correcte d'un véhicule entraîne une alarme dans la station centrale.

Ce système n'est pas un système de radiolocalisation proprement dit mais il fonctionne avec échange de signaux radioélectriques quand le véhicule est dans une position prédéterminée, qu'il en soit fait un usage frauduleux ou non.

Dans le document FR-A-2 620 096, il est décrit un système de recherche et de poursuite de véhicules volés dans lequel les véhicules de particuliers et des véhicules de patrouille sont équipés d'émetteurs-récepteurs de deux types différents prévus pour effectuer des échanges de messages numériques. Quand le véhicule d'un particulier fait l'objet d'un vol, son émetteur-récepteur se met en état d'écoute. Quand l'émetteur d'un véhicule de patrouille effectue une interrogation générale, celui du véhicule volé lui répond en donnant son identité, les références de la voiture, etc. En pratique, des précautions sont prises pour éviter que plusieurs véhicules de patrouille ne lancent des interrogations en même temps et pour que les réponses des véhicules volés ne se chevauchent. Dans les véhicules de particuliers on utilise des temps de retard aléatoire et une fréquence d'émission choisie arbitrairement parmi plusieurs.

Il apparaît que, dans ce système, on utilise une interrogation générale et des antennes de réception directionnelles pour localiser le véhicule qui répond.

En résumé, dans le premier système mentionné ci-dessus, il n'y a pas d'interrogation initiale transmise vers le véhicule volé, mais uniquement un signal de réponse capable, par exemple, de commander une alarme dans le véhicule, et il n'y a qu'une localisation directionnelle. Dans le second système, la localisation n'est possible qu'à des endroits prédéterminés. Dans le troisième système, il y a interrogation générale suivie de réponses dont le chevauchement est évité en utilisant des moyens de sélection de temps et de fréquence d'émission sophistiqués, donc chers. Il n'y a aussi qu'une localisation directionnelle. Enfin, tous ces systèmes ne sont prévus que pour des recherches locales de véhicules, par exemple dans un rayon de quelques kilomètres.

Un objet de la présente invention consiste à prévoir un système permettant de localiser un véhicule volé à une échelle nationale. De plus le système de l'invention n'utilise comme station d'interrogation et comme stations de localisation que des stations fixes. Comme on le verra dans la suite, l'infrastructure de ces stations fixes a le mérite de déjà exister. Enfin, dans les véhicules susceptibles d'être volés, la partie réception des émetteurs-récepteurs est également celle d'un appareil existant extrêmement répandu.

Suivant une caractéristique de l'invention, il est prévu un système radioélectrique de localisation d'un mobile comprenant, dans chaque mobile, un répondeur dont le récgpteur est un récepteur d'appel de personnes avec code(s) individuel(s) d'identification et dont l'émetteur est capable d'émettre le code d'identification du répondeur, un réseau radioélectrique d'appels de personnes, un ensemble de radiogoniomètres capable de localiser, par triangulation, le mobile dont l'émetteur du répondeur émet un code d'identification en réponse au code d'appel lancé par le réseau radioélectrique d'appels de personnes, l'ensemble des radiogoniomètres étant relié au réseau radioélectrique d'appels de personnes par des moyens de transmission pour être mis en alerte à chaque code d'appel lancé par ledit réseau.

Suivant une autre caractéristique, dans chaque répondeur, la sortie dudit récepteur d'appel de personnes est déconnectée des dispositifs d'alarme habituels et reliée à un organe de commande qui déclenche l'émission de l'émetteur associe.

Suivant une autre caractéristique, le réseau radioélectrique d'appels de personne, après l'envoi d'un premier code d'appel, ne lancera un nouveau code d'appel vers un autre mobile qu'après un intervalle de temps prédéterminé.

Suivant une autre caractéristique, la sortie de l'organe de commande du répondeur n'est validée, à la réception d'un code d'appel, qu'après un retard prédéterminé.

Suivant une autre caractéristique, pendant ledit retard prédéterminé, le réseau radioélectrique d'appels de personnes peut lancer séquentiellement de nouveaux appels.

Suivant une autre caractéristique, chaque organe de commande comporte une base de temps programmable en série avec un commutateur.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

la Fig. 1 est le bloc-diagramme d'un répondeur suivant l'invention,

la Fig. 2 est un schéma-bloc illustrant le système suivant l'invention,

la Fig. 3 est un diagramme temporel illustrant un premier mode de fonctionnement du système de la Fig. 2, et

la Fig. 4 est un diagramme temporel illustrant un second mode de fonctionnement du système de la Fig. 2.

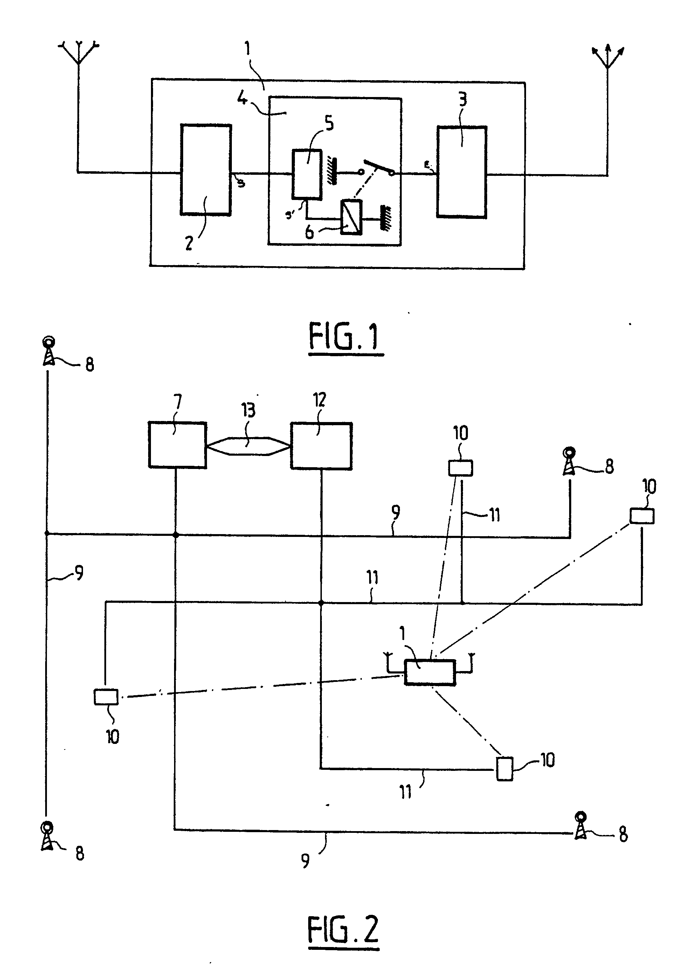

Le répondeur 1, montré à la Fig. 1, comprend un récepteur 2 dont l'entrée est reliée à une antenne de réception, un émetteur 3 dont la sortie est reliée à une antenne d'émission, et un organe de commande 4 monté entre la sortie 5 du récepteur 2 et l'entrée de commande E de l'émetteur 3.

Le récepteur 2 est un récepteur classique d'appel de personnes, par exemple du type récepteur EUROSIGNAL, dont on a déconnecté la sortie S des dispositifs d'alarme habituels, pour la relier à l'entrée de l'organe de commande 4. L'organe de commande 4 comprend, par exemple, une base de temps 5 en série avec un relais 6. L'entrée de la base de temps 5 est reliée à la sortie S et sa sortie S' est reliée à l'enroulement du relais 6. Le contact de travail du relais 6 est relié à l'entrée E qui contrôle la mise au travail de l'émetteur 3. On verra dans la suite à quoi sert la base de temps 5. L'émetteur 3 est capable d'émettre sur une fréquence déterminée, avec une modulation déterminée un code d'identification correspondant au répondeur.

Les accès aux antennes du récepteur 2 et de l'émetteur 3 du répondeur 1 peuvent être réunis dans un dispositif adéquat, tel qu'un circulateur ou un coupleur, pour être connectés à une antenne unique, telle que l'antenne de l'autoradio ou une antenne incluse dans le pare-brise du véhicule, le rétroviseur, etc. Dans la présente description, quand on emploie le mot "émetteur" ou "récepteur", il doit être entendu que l'on désigne l'émetteur et son antenne, ou le récepteur et son antenne.

A la Fig. 2, on a montré un réseau radioélectrique d'appels de personnes avec son poste central 7 et une pluralité d'émetteurs fixes 8 auquel le poste 7 est relié par des lignes classiques de transmission 9. De tels réseaux 7-8-9 sont connus et, pour certains, déjà en service. On les range en deux catégories :

- les réseaux dont le contenu du code d'appel est rudimentaire: EUROSIGNAL, SEMAPHORE, MULTITONS, etc. Ces réseaux permettent de déclencher par le poste central 7, l'émission par les émetteurs 8 d'un code d'appel vers un récepteur d'appel de personnes, tel que 2, Fig. 1, qui le détecte et déclenche une alarme.

- les réseaux dont le contenu du code d'appel est riche en informations, soit numériques, tels que les systèmes aux normes RDS ou POCSAG, soit alphanumérique, tels que les systèmes aux normes GOLAY, POCSAG, etc.

Dans ce dernier cas, au moyen d'un terminal informatique ou un poste téléphonique à fréquences vocales, on envoie au poste central 7, d'abord le code d'identification de l'appelé, puis le message numérique ou alpha numérique à transmettre. Seul le récepteur activé par la réception de son code d'appel pourra recevoir le message qui suit le code. Il déclenche une alarme et, de plus, affiche le message sur son écran.

A la Fig. 2, on a également montré un ensemble de radiogoniomètres 10 qui sont reliés par des lignes de transmission bidirectionnelles 11 à un poste de commande 12, lui-même relié au poste central 7 par un liaison informatique 13. Les radiogonomètres 10 couvrent au moins l'ensemble du territoire du réseau 7-8-9. Chaque radiogoniomètre relève la direction de l'émetteur du répondeur 1, Fig. 2, qui émet son code d'identification et transmet l'azimut de la direction au poste de contrôle 12 qui corrèle les résultats provenant de l'ensemble des radiogoniomètres 10 et les traduit en une position géographique dans le territoire concerné.

De tels systèmes de goniométrie existent et certains d'entre eux sont entièrement automatiques, comme celui de l'administration FRANCE TELECOM qui couvre toute la France.

Les lignes bidirectionnelles 11 servent au poste de contrôle 12 à ordonner aux radiogoniomètres 10 de se mettre au travail à des instants qu'il a décidé et sur des fréquences et des modulations qu'il a décidé. Elles servent aux radiogoniomètres à transmettre au poste de contrôle 12 les directions qu'ils ont relevées.

La liaison 13 sert au poste de contrôle 12 à transmettre au poste central 7 des codes d'appel de répondeurs de véhicules équipés de répondeurs suivant l'invention, et au poste central à transmettre au poste de contrôle les instants auxquels ces codes d'appel seront lancés.

En pratique, les personnes ou services publics désireux de faire localiser un véhicule volé compose le code d'appel du répondeur du véhicule et ces codes sont groupés au poste de contrôle.

A titre d'exemples, deux types de fonctionnement du système de localisation suivant l'invention sont envisageables, selon que le réseau radioélectrique d'appels de personnes est à code d'appel rudimentaire ou suivi d'un message.

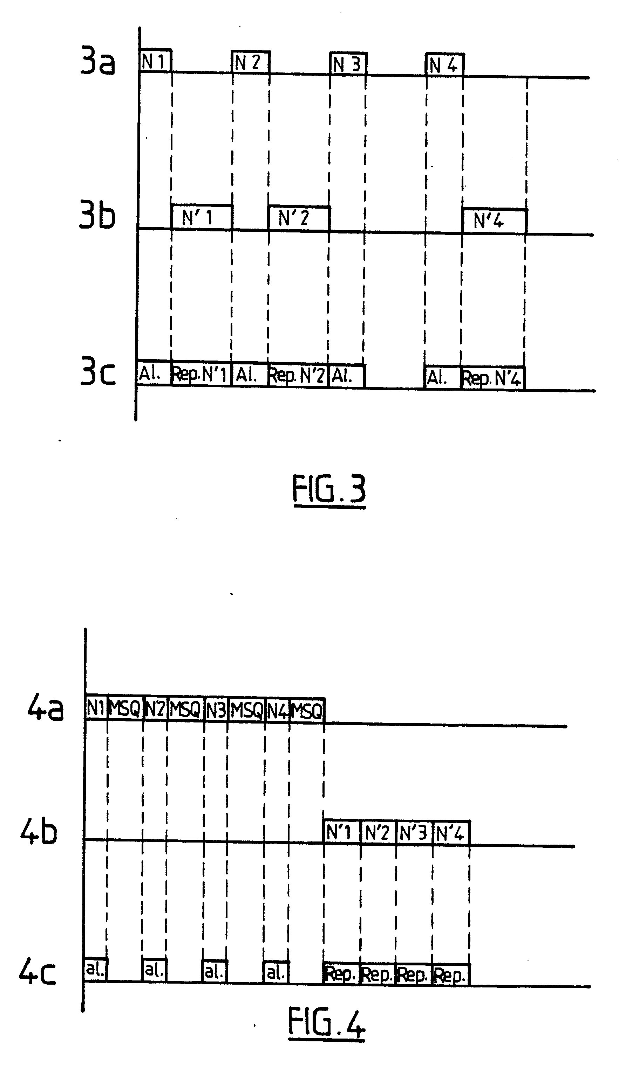

Le diagramme temporel de la Fig. 3 illustre un fonctionnement selon le premier cas. La ligne 3a montre les temps de travail N1, N2, N3, N4, etc., du réseau 7-8-9 au cours desquels ce réseau émet successivement les codes d'appel des répondeurs des véhicules N1, N2, N3, N4, etc. Entre chaque temps de travail, le poste central 7 transmet, en avance, au poste de contrôle 12 lesdits codes à repérer, lequel les retransmet aux radiogoniomètres 10.

La ligne 3b montre les temps de travail N'1, N'2, N'4, etc., des émetteurs des répondeurs dont les récepteurs ont reconnu leurs codes d'appel. Dans le cas montré, on suppose que le code N3 n'a pas été reconnu. Les temps d'émission des codes d'identification, ligne 3b, commencent au moment où les temps de travail de la ligne 3a finissent et vice-versa.

La ligne 3c concerne le fonctionnement du système de goniométrie et montre les temps A1 pendant lesquels chaque radiogoniomètre 10 est mis en alerte par le poste de contrôle sur un code d'identification à repérer et les temps intermédiaires pendant lesquels les radiogoniomètres sont en état de repérage.

Pour réaliser le fonctionnement décrit en relation avec la Fig. 3, chaque base de temps 5 d'un répondeur 1 est réglée pour qu'après la détection du code d'appel par le récepteur, l'émetteur du répondeur fonctionne pendant un temps prédéterminés représentés par les longueurs des intervalles N'1, etc., de la ligne 3b.

Le diagramme temporel de la Fig. 4 illustre un fonctionnement selon le second cas. La ligne 4a montre les temps de travail N1 + MSQ, N2 + MSQ, N3 + MSG, N4 + MSQ, du réseau 7-8-9, ces temps se suivant sans interruption. Au cours de chaque temps Ni + MSQ, le réseau transmet le code d'appel du répondeur d'un véhicule, suivi d'un message MSQ qui indique notamment le temps d'attente au bout duquel l'émetteur enverra son code d'identification et pendant combien de temps, ledit message étant interprété par la base de temps 5. Dans cet exemple, on suppose que le réseau envoie une série de quatre codes d'appel.

La ligne 4b montre les temps de travail N'1 à N'4 des émetteurs des répondeurs qui ont reconnu les codes d'appel N1 à N4. Ces temps de travail se suivent sans interruption et ont la même durée.

La ligne 4c concerne le fonctionnement du système de goniométrie et montre, d'abord, les temps A1 pendant lesquels chaque radiogoniomètre 10 est mis en alerte sur un code d'identification à repérer, puis, les temps de travail Rep pendant lesquels ils sont en état de repérage.

Bien entendu, le répondeur suivant l'invention est monté dans un endroit du véhicule difficilement accessible et alimenté par la batterie du véhicule et une pile indépendante.

La description, qui précède, d'un exemple de réalisation du système de l'invention a permis d'apprécier toute la puissance du système qui peut couvrir l'équivalent d'un territoire national ou plus en utilisant des structures fixes existantes, réseau 7-8-9 et ensemble 10-11-12, auxquelles il suffit d'ajouter la liaison 13, et des récepteurs 2 de répondeurs fabriqués en série. Le système de l'invention n'exige donc que l'addition d'un émetteur 3 par répondeur. On comprendra alors que le système de localisation de véhicules volés peut être très efficace, sans exiger une trop grosse dépense des utilisateurs.

**Revendications**

1) Système radioélectrique de localisation d'un mobile, chaque mobile comprenant un répondeur (1) dont le récepteur (2) est un récepteur d'appel avec code(s) individuel(s) d'identification dont la sortie est reliée à un organe de commande (4) qui déclenche l'émission d'un signal spécifique par l'émetteur associé (3) (du répondeur (1), le système comprenant un ensemble de radiodiffusion (7-8-9) d'appels, et un ensemble de radiogoniomètres (10-11-12) capable ( de localiser, par triangulation, le mobile dont l'émetteur (3) du répondeur (1) émet un signal, caractérisé en ce que l'ensemble de radiogoniomètres (10-11-12) est relié à l'ensemble de radiodiffusion (7-8-9) par des moyens de transmission (13) pour être mis en alerte à chaque code d'appel lancé par ledit ensemble de radiodiffusion.

2) Système suivant la revendication 1, caractérisé en ce que l'ensemble de radiodiffusion (7-8-9), après l'envoi d'un premier code d'appel, ne lance un nouveau code d'appel qu'après un intervalle de temps prédéterminé, l'organe de commande (4) déclenchant, pendant un temps prédéterminé, avec ou sans retard, l'émission dudit signal spécifique de l'émetteur associé (3).

3) Système suivant la revendication 1, caractérisé en ce que la sortie de l'organe de commande (4) du répondeur (1) n'est validée, à la réception d'un code d'appel, qu'après un retard prédéterminé, et que, pendant ledit retard prédéterminé, l'ensemble de radiodiffusion (7-8-9) lance séquentiellement une série d'autres codes d'appel.

4) Système suivant la revendication 3, caractérisé en ce que chaque organe de commande (4) comporte une base de temps (5) programmable en série avec un commutateur (6).

5) Système suivant l'une des revendications 1 à 4, caractérisé en ce que l'ensemble de radiodiffusion (7-8-9) est un réseau radioélectrique d'appels de personnes.

6) Système suivant l'une des revendications I à 5, caractérisé en ce que ledit signal spécifique est identique au code d'appel identifiant le répondeur (1).

FIG.1

FIG.2

FIG. 3

FIG. 4

**Office européen
des brevets**

# RAPPORT DE RECHERCHE
## EUROPEENNE

Numéro de la demande

**EP 90 46 0033**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 596 988  (J.T. WANKA)<br>* Colonne 2, ligne 29 - colonne 4, ligne 12; figures 1-3 *<br>— — — | 1 | G 01 S 5/04<br>G 01 S 13/74 |
| Y | | 2-4 | |
| X | US-A-4 177 466  (W.R. REAGAN)<br>* En entier *<br>— — — | 1 | |
| Y | | 2-4 | |
| X | US-A-4 742 357  (E.C. RACKLEY)<br>* Colonne 3, ligne 31 - colonne 4, ligne 31; colonne 6, ligne 47 - colonne 10, ligne 11; figures 1-7 *<br>— — — | 1 | |
| A | EP-A-0 245 555  (LO-JACK CORP.)<br>* Page 10, ligne 1 - page 15, ligne 1; figures 1-4 *<br>— — — — — | 1 | |

|  |  |
|---|---|
| | **DOMAINES TECHNIQUES RECHERCHES (Int. Cl.5)**<br><br>G 01 S |

Le présent rapport de recherche a été établi pour toutes les revendications

| Lieu de la recherche | Date d'achèvement de la recherche | Examinateur |
|---|---|---|
| La Haye | 16 novembre 90 | VAN WEEL E.J.G. |